# EUROPEAN PATENT APPLICATION

(11) **EP 1 602 855 A2**
(43) Date of publication of application: **07.12.2005**
(21) Application number: 05253030.0
(22) Date of filing: 18.05.2005
(51) Int. Cl.: F16F 15/32, G01M 1/36, F01D 5/02

(54) **Balancing assembly for turbine rotor**

(30) Priority: 01.06.2004 US 857820
(71) Applicant: GENERAL ELECTRIC COMPANY, Schenectady, NY 12345 (US)
(72) Inventor: Przytulski, James Charles, Ohio 45014 (US); Altman, John Edward, Ohio 45252 (US); Ceccopieri, Fernando, Ohio 45140 (US); Mcgreehan, William Francis, Ohio 45011 (US); Shaub, Clarence J., Ohio 45036 (US)
(74) Representative: Goode, Ian Roy

(57) **Abstract**

A balance assembly (58) for rotary turbine components, such as turbine rotors, as well as method for installing and/or adjusting at least one balance weight (66) in the balance assembly (58) and turbine section having this balance assembly (58) and a radially extending access pathway for accessing this balance assembly(58). The balance assembly (58) comprises; (a) a balance weight retention member (62) having a circumferential periphery (92) and a slot (90) formed therein along at least a portion thereof, the slot (90) having: (1) a bottom surface (94); (2) an opening (98); and (3) a pair of spaced apart and opposed side walls (102, 106) connecting the bottom surface (94) and the opening (98), the side walls (102, 106) sloping inwardly between the bottom surface (94) and the opening (98) to define a balance weight engaging section (114); (b) at least one balance weight (66) configured and sized to be insertable through the opening (98) of the slot (90) and to be positionable for movement within the slot (90) and having a pair of spaced apart generally inwardly sloping shoulder surfaces (152, 156) capable of engaging the side walls (102, 106) of the slot (90) at the balance weight engaging section (114); and (c) a balance weight securing member (70) associated with the at least one balance weight (66) that can be actuated to: (1) move the at least one balance weight (66) away from the bottom surface (94) so that the shoulder surfaces (152, 156) engage the side walls (102, 106) at the balance weight engaging section (114) such that the at least one balance weight (66) is in a secured position within the slot (90); or (2) move the at least one balance weight (66) towards the bottom surface (94) so that the shoulder surfaces (152, 156) do not engage the side walls (102, 106) at the balance weight engaging section (114) such that the at least one balance weight (66) is in a unsecured position within the slot (90).

## Description

This invention relates generally to a balance assembly for a rotary turbine component such as a turbine rotor. This invention also relates to a method for installing one or more balance weights in this balance assembly, as well as adjusting the balance weight(s) after installation. This invention further relates to a turbine section having this balance assembly and a radially extending access pathway for accessing this balance assembly.

In the production of turbine engines, the balancing of the rotary turbine components, such as turbine rotors, can be an essential and important step. The turbine rotors are typically balanced initially prior to the actual assembly of the engine. This balancing can be achieved in variety of ways, for example, by the attachment of special weights designed to fit on bolts or within grooves of the rotor or associated components, or by grinding material from specified sections on the rotor. See U.S. Pat. No. 4,220,055 (Dubois et al), issued September 2, 1980 (balance weight having beak engaging groove of collar and secured to rotor by rivet); U.S. Pat. No. 4,803,893 (Bachinski), issued February 14, 1989 (balance weights located in groove of cover plate for rotor assembly); commonly assigned U.S. Pat. No. 5,011,374 (Miller), issued April 30, 1991 (balance clips attached to shroud of rotor); commonly assigned U.S. Pat. No. 5,018,943 (Corsmeier et al), issued May 28, 1991 (balance weight mounted in dovetail slots formed in circumference of rotor disk and bottom of dovetail root of rotor blades inserted within dovetail slots). Due to subsequent operations in assembling the engine, there is often a need for further adjustment or balancing of the rotary components after this engine is completed. This is commonly referred to as "trim balancing." During subsequent operation of the turbine engine, adjustment or rebalancing of the rotary components can also be necessary.

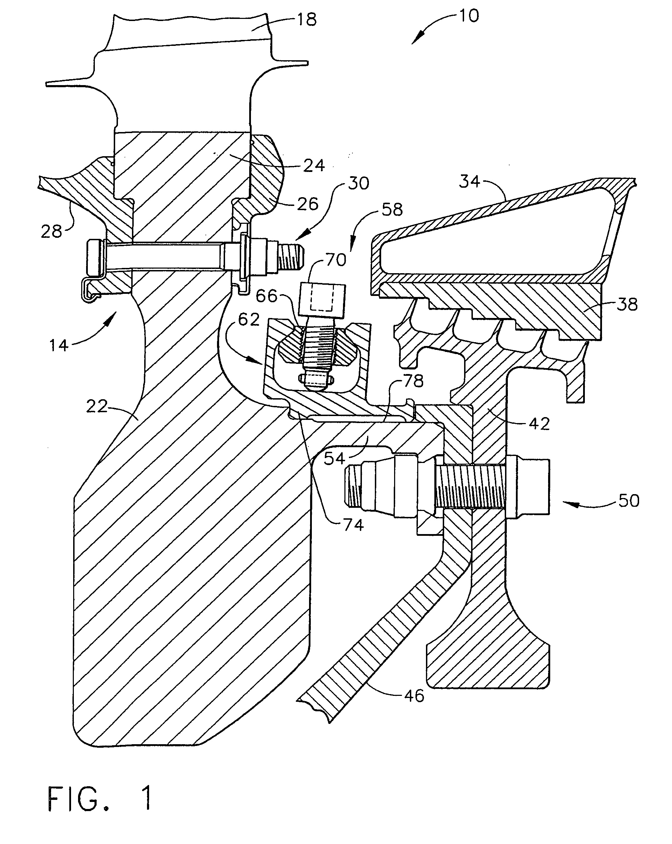

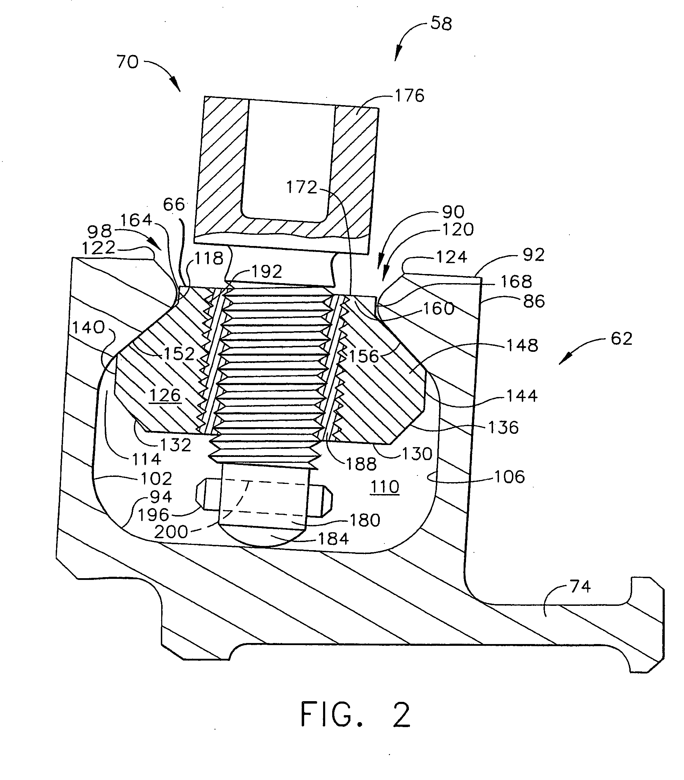

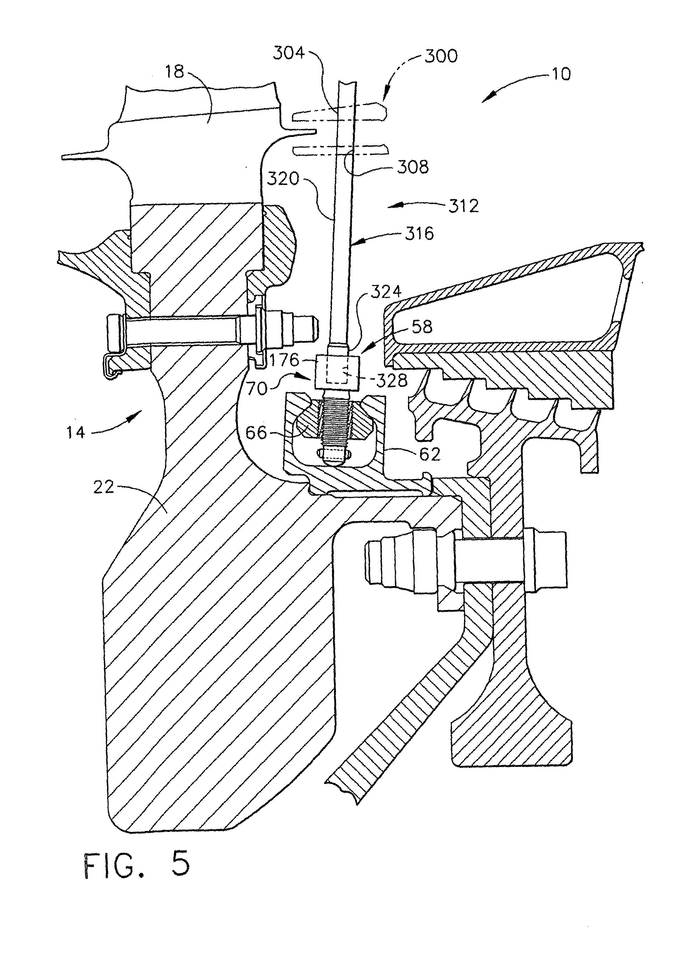

A problem with certain balancing systems for rotors is that trim balancing or rebalancing of the rotors can require partial or complete disassembly of the engine in order to access the balance weights. For example, one prior balancing system uses balance weights that are inserted into a circular or circumferential groove or slot typically formed in the face or circumference of the disk, wheel and/or spacer of the rotor, with the weights then being moved or adjusted within the groove or slot to achieve the desired degree of balancing. See commonly assigned U.S. Pat. No. 3,736,811 (Neary), issued June 5, 1973 (balance weight inserted in balance groove formed in face of turbine wheel and locked in place anywhere along balance groove by screw adjustment); U.S. Pat. No. 4,842,485 (Barber), issued June 27, 1989 (circular groove formed in at least one face of turbine to receive weight assembly comprising arcuate body member with bore and slots in side walls to allow expansion by expander screw); commonly assigned U.S. Pat. No. 6,481,969 (Berry et al), issued November 19, 2002 (dovetail-shaped grooves formed in axial faces and circumferential rims of wheels and spacers of rotor body and complementary-shaped balance weights inserted through entry apertures in grooves and circumferentially aligned into adjusted positions). After the balance weights are secured in place in the groove or slot, and the engine is completely assembled, these balance weights are typically intended to be fixed in position and not moved again to readjust or trim the balance of the rotary component. As a result, these balance weights are usually inaccessible without at least partial disassembly of the engine. Certain of these balance weight systems also require specially formed access ports or openings in the groove or slot so that the balance weights can be inserted. See Figs. 1 and 2 of U.S. Pat. No. 3,736,811 (prior art) and Fig. 5 of U.S. Pat. No. 6,481,969. Such access ports or openings can cause a lack of symmetry in weight distribution of the balance assembly, as well as creating potential weaknesses in the balance assembly with regard to the concentration of stresses.

Balance systems for rotary components of turbine engines have also been developed that allow for remote access to areas of the engine where the balance weights are already installed, or where the balance weights can be inserted, for trim balancing or rebalancing without disassembly of the engine. Some of these balance systems can require that the balance weight be inserted at a specific location, thus making finer balance adjustments more difficult to achieve. See U.S. Pat. No. 2,964,972 (Lindsey et al), issued December 20, 1960 (balance assembly for rotor comprising annular member provided with plurality of circumferentially spaced thread holes that can be accessed through pathway to receive balance weights delivered by special tool); U.S. Pat. No. 5,545,010 (Cederwall et al), issued August 13, 1996 (trim balancing of turbine rotor by adding or removing balance weights or plugs through compressor air flow path and pair of holes). Some of these remote access balancing systems allow for insertion of the balance weight at various positions in a groove or slot formed in the rotor assembly. See U.S. Pat. No. 4,064,762 (Wilkner), issued December 27, 1977 (tool for inserting balance weight into dovetail groove in rotor disk); commonly assigned U.S. Pat. No. 6,279,420 (Knorowski et al), issued August 28, 2001 (balance weight groove formed in rotor, a balance weight having a threaded opening for receiving a screw and a threaded tool for inserting the balance weight in the groove, rotating the screw to lock the balance weight in the groove, and a staking tool that is inserted to stake the balance weight and rotor, as well as the screw and balance weight). However, after the balance weight is inserted into the groove, it is, again, typically intended to be fixed in place and not moved again to readjust or trim the balance of the rotary component.

Accordingly, it would be desirable to provide a balance assembly for rotary turbine components, such as turbine rotors, that can be used to trim balance or rebalance the rotor while the turbine engine remains completely or substantially completely assembled. It would also be desirable to provide a balance assembly for turbine rotors where the balance weights can be relatively easily located or moved to different positions to allow for relatively fine adjustments of the balancing of the rotor. It would also be desirable to be able to install the balance weights without the need of specially formed access ports or openings in the balance assembly. It would be further desirable to provide a balance assembly for turbine rotors where the balance weights can be relatively easily readjusted after initial installation for subsequent trim balancing and rebalancing of the rotor.

An embodiment of this invention relates to a balance assembly for rotary turbine components, such as turbine rotors. This assembly comprises:
a generally annular balance weight retention member having a circumferential periphery and a slot formed therein along at least a portion thereof, the slot having:
a bottom surface;
an opening spaced from the bottom surface; and
a pair of spaced apart and opposed side walls connecting the bottom surface and the opening, the side walls sloping inwardly between the bottom surface and the opening to define a balance weight engaging section;
at least one balance weight being configured and sized to be insertable through the opening of the slot and to be positionable for movement within the slot and having a pair of spaced apart generally inwardly sloping shoulder surfaces capable of engaging the side walls of the slot at the balance weight engaging section; and
a balance weight securing member associated with the at least one balance weight that can be actuated to:
   move the at least one balance weight away from the bottom surface so that the shoulder surfaces engage the side walls at the balance weight engaging section such that the at least one balance weight is in a secured position within the slot; or
   move the at least one balance weight towards the bottom surface so that the shoulder surfaces do not engage the side walls at the balance weight engaging section such that the at least one balance weight is in a unsecured position within the slot.

Another embodiment of this invention relates to a method for installing at least one balance weight in this balance assembly. This method comprises the steps of:
inserting the at least one balance weight through the opening of the slot of the balance weight retention member so that the at least one balance weight is in a first inserted position within the slot;
adjusting the at least one balance weight from the first inserted position to a second securing member associating position within the slot so that the at least one balance weight is capable of being associated with the balance weight securing member; and
associating the balance weight securing member with the at least one balance weight while in the second position.

Another embodiment of this invention relates to a section of a turbine engine having this balance assembly and a radially extending access pathway for accessing this balance assembly.

The balance assembly and method of this invention, as well as the section of the turbine engine having the radially extending access pathway for accessing this balance assembly, provides a number of significant benefits and advantages in the balancing of rotary turbine components such as turbine rotors. The balance assembly, method and section of the turbine engine having the radially extending access pathway for accessing the balance assembly of this invention allows the rotary turbine components to be trim balanced or rebalanced while the turbine engine remains completely or substantially completely assembled. The balance assembly, method and section of the turbine engine having the radially extending access pathway for accessing the balance assembly of this invention allows the balance weight(s) to be located or moved to different positions in the balance assembly to allow for relatively fine adjustment in the balancing of the rotor. The balance weight(s) and associated slot of the balance weight retention member are also sized and configured such that specially formed balance weight access ports or openings are not required for insertion of the balance weight(s) into the slot. The balance assembly and section of the turbine engine having the radially extending access pathway for accessing this balance assembly of this invention also allow for relatively easy readjustment of the balance weight(s) after insertion into the slot for subsequent trim balancing and rebalancing of the rotor.

Embodiments of the invention will now be described, by way of example, with reference to the accompanying drawings, in which:
FIG. 1 is a fragmentary cross-section of a section of a turbine engine showing an embodiment of the balance assembly of this invention with an installed balance weight.
FIG. 2 is an enlarged sectional view of the balance assembly of FIG. 1.
FIG. 3 is a view similar to FIG. 2 showing the insertion of a balance weight in the slot of the balance weight retention member.
FIG. 4 is a view similar to FIG. 3 showing the inserted balance weight moved, adjusted or rotated from the initial inserted position to a second position where the balance weight can be associated with the balance weight securing member.
FIG. 5 is a view similar to FIG. 1 showing an access way in a section of a turbine engine for accessing the balance assembly, as well as a tool inserted through this access way for unsecuring, moving and/or securing the balance weight.

Referring to the drawings, FIG. 1 illustrates a fragmentary cross-section of a representative section of a turbine engine that is indicated generally as 10 in which the balance assembly of this invention can be used. Turbine engine section 10 is shown as having a turbine rotor indicated generally as 14. Turbine engine section 10 can be any section having such a rotor 14, including but not limited to a high pressure (HP) compressor section, a low pressure (LP) compressor section, an HP turbine section, a LP turbine section, an intermediate power (IP) turbine section, or a power (PW) turbine section. In other words, the turbine engine section 10 shown in FIG. 1, and as described hereafter, should be considered only representative of the use of the embodiment of the balance assembly of this invention.

As shown in FIG. 1, rotor 14 comprises a plurality of circumferentially spaced turbine blades, one of which is indicated as 18, that extend radially from a central hub or disk indicated as 22. The root 24 of blade 18 is positioned between a blade retainer 26 and interstage seal 28 that together are secured to disk 22 by a bolt assembly indicated generally as 30. As shown in FIG. 1, turbine engine section 10 also includes a support structure indicated generally as 34 for the stationary portion 38 of a pressure seal. The pressure seal also includes a rotating portion 42 that is secured to a rotating shaft 46 by a bolt assembly indicated generally as 50. Bolt assembly 50 also secures rotating pressure seal portion 42 and shaft 46 to the rearward annular portion 54 of disk 22.

As shown in FIG. 1, an embodiment of the balance assembly of this invention indicated generally as 58 is used to balance rotor 14. This balance assembly 58 includes a balance weight retention member indicated generally as 62, at least one balance weight indicated generally as 66 and a balance weight securing member in the form of a threaded bolt indicated generally as 70. The balance weight retention member 62 includes a support portion 74 typically having a concentric rabbet formed therein for securing or attaching member 62 to the concentric outer surface 78 of rearward portion 54 of disk 22. To prevent rotation of balance weight retention member 62 around or about the concentric outer surface 78 of rearward portion 54, support portion 74 can be provided with a slot (not shown) that receives the head of a spring pin (not shown) that is secured to the rearward portion 54 of disk 22.

As shown more particularly in FIG. 2, balance weight retention member 62 also includes a generally annular balance weight retention portion 86. Balance weight retention portion 86 is provided with a slot 90 that is formed along at least a portion of the circumferential periphery 92 of retention portion 86, and is more typically formed along the entire length of periphery 92. As shown in FIG. 2, slot 90 typically has a generally dove-tail shaped cross sectional configuration. Slot 90 has a bottom surface indicated as 94, an opening spaced from bottom surface 94 indicated generally as 98 at the top of slot 90, and a pair of spaced apart and opposed side walls indicated as 102 and 106 connecting the bottom surface 94 to opening 98.

As shown in FIG. 2, side walls 102, 106 are shaped or configured to define a generally rectangular-shaped lower section 110 of slot 90 where side walls 102, 106 extend generally upwardly and perpendicularly from the respective ends of bottom surface 94, an intermediate generally trapezoidal or wedge-shaped section 114 of slot 90 adjacent to lower section 110 where side walls 102, 106 generally converge or slope inwardly from the top of lower section 110 to form a constriction indicated as 118 at the top of intermediate section 114, and an upper generally trapezoidal or wedge-shaped section 120 of slot 90 adjacent to intermediate section 114 and generally diverging or sloping outwardly from constriction 118 to opening 98. At least upper and intermediate sections 120 and 114 of slot 90, and also usually lower section 110 of slot 90, typically have substantially the same cross-sectional configuration and width dimensions along the entire circumferential length of slot 90. In particular, the width between the spaced apart pair edges 122 and 124 of opening 98 is typically substantially uniform or essentially the same along the entire length of slot 90, e.g., along the entire circumferential periphery 92.

As shown in FIG. 2, balance weight 66 includes a base portion indicated generally as 126 having a generally planar bottom surface 130, a pair of spaced apart outwardly diverging or sloping generally planar surfaces 132 and 136 connected at each end of bottom surface 130, and a pair of spaced apart upwardly extending generally planar surfaces 140 and 144 connected at the respective ends of outwardly sloping surfaces 132, 136. As shown in FIG. 2, balance weight 66 also includes a generally trapezoidal or wedge-shaped shoulder portion indicated generally as 148 adjacent to base portion and having a pair of spaced apart generally inwardly converging or sloping shoulder surfaces 152 and 156 connected at the respective ends of upwardly extending surfaces 140 and 144. As also shown in FIG. 2, balance weight 66 further includes a generally rectangular-shaped neck portion indicated generally as 160 adjacent to shoulder portion 148 and having a pair of spaced apart generally planar upwardly extending neck surfaces 164 and 168 connected at the respective ends to shoulder surfaces 152, 156 and a generally planar top surface 172 connected at the respective ends to neck surfaces 164, 168. As shown in FIG. 2, top surface 172 is typically substantially parallel to bottom surface 130.

As shown in FIG. 2, bolt 70 has a head 176 connected to a threaded generally cylindrical shaft 180 having a distal end indicated generally as 184. As shown in FIG. 2, balance weight 66 has a complementary threaded portion for receiving threaded shaft 180 in the form of a threaded cylindrical insert 188 positioned within a generally cylindrical bore 192 that extends from the top surface 172 to the bottom surface 130 of balance weight 66. As shown in FIG. 2, balance weight 66 is typically substantially symmetrical about the centerline defined by cylindrical insert 188. As shown in FIG. 2, bolt 70 is also provided with a locking member in the form of locking pin 196 that is inserted through a generally cylindrical bore 200 formed in distal end 184 perpendicular to the longitudinal axis of shaft 180. When inserted into bore 200, locking pin 196 prevents bolt 70 from accidentally being completely disconnected from balance weight 66 as bolt 70 is unscrewed.

Balance weight 66 is shown in FIGs. 1 and 2 as being in a secured position within slot 90 such that balance weight 66 cannot be moved within slot 90. This is achieved by turning or screwing bolt 70 into insert 188 in the "secure position" direction such that the distal end 184 of shaft 180 projects further outwardly away from the bottom surface 130 of balance weight 66 and towards bottom surface 94 of slot 90. As bolt 70 is screwed further into insert 188 so that distal end 180 continues to project further outwardly from bottom surface 130, distal end 180 eventually engages bottom surface 94 so that balance weight 66 is forced away from bottom surface 94. As a result, shoulder surfaces 152, 156 of balance weight 66 are moved towards side walls 102, 106 where they slope inwardly at intermediate section 114 of slot 90. As balance weight 66 moves further away from bottom surface 94 of slot 90, neck portion 160 will eventually be guided through constriction 118 and into the upper section 122 of slot 90. Eventually, shoulder surfaces 152, 156 will engage respective side walls 102, 106 at intermediate (i.e., "balance weight engaging") section 114 until bolt 70 can no longer be screwed into insert 188 of balance weight 66. As this point, balance weight 66 is held in a place in a secured and relatively immovable position due to the force of distal end 180 of shaft 174 against bottom surface 94 of slot 90 and the frictional engagement of shoulder portions 152, 156 against respective side walls 102, 106 at the intermediate (i.e., "balance weight engaging") section 114 of slot 90. As also shown in FIG. 2, when balance weight 66 is in this secured position, bottom surface 130 of balance weight 66 is typically substantially parallel to bottom surface 94 of slot 90.

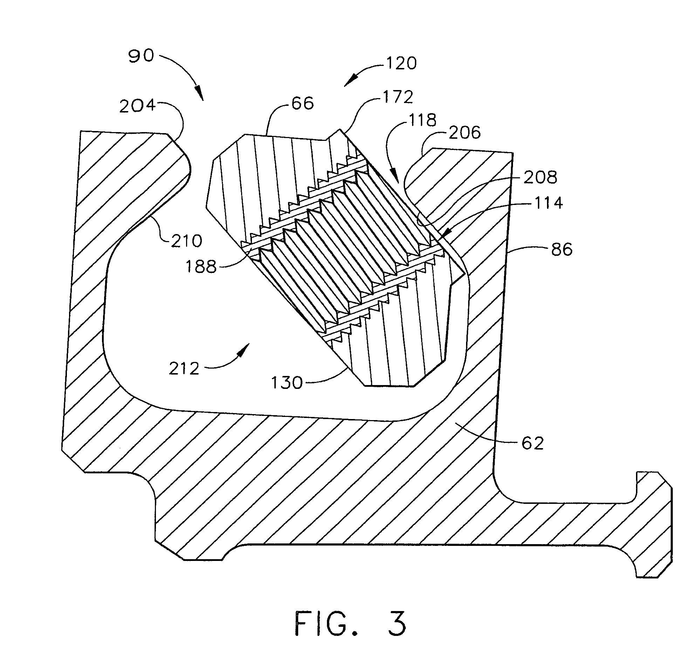

In order to install or position balance weight 66 within slot 90, bolt 70 is initially not attached or associated with balance weight 66. Instead, as shown in FIG. 3, balance weight 66 is inserted through opening 98 and upper section 122 of slot 90 without being associated with bolt 70. Insertion of balance weight 66 within slot 90 is typically carried out before balance weight retention member 62 is secured to rearward portion 54 of disk 22. As shown in FIG. 3, balance weight 66 is typically inserted through opening 98 and upper section 122 at a slanted angle, i.e., such that bottom surface 130 of balance weight 66 is not perpendicular to bottom surface 94 of slot 90. Because the width or dimension of balance weight 66 defined by top surface 172 and bottom surface 130 is less than the width defined by constriction 118, as well as the width defined by and between outwardly sloping surface 204 (or 206) of slot 90 at upper section 122 and inwardly sloping surface 208 (or 210) of slot 90 at intermediate section 114, balance weight 66 can be inserted into slot 90 without the need of specially configured access ports or openings. Indeed, balance weight 66 can typically be inserted through opening 98 and upper section 122 of slot 90 at any position along the length thereof, e.g. along circumferential periphery 92.

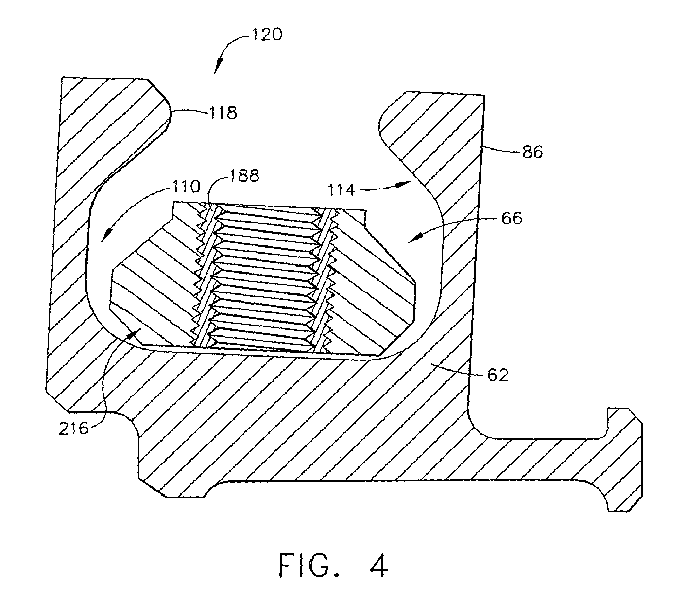

From this first inserted position indicated generally as 212 in FIG. 3, and because of the configuration and size of balance weight 66, as well as the configuration and size of slot 90 at intermediate and lower sections 114 and 110, balance weight 66 can then be moved, adjusted or rotated to a second position indicated generally as 216 in FIG. 4 within lower section 110 of slot 90. When in second position 216, balance weight 66 is fully within and movable in slot 90 (e.g., within lower section 110) and is also capable of receiving bolt 70. When bolt 70 is screwed into insert 188 in balance weight 66 such that bore 200 is beyond bottom surface 130, locking pin 196 can then be inserted into bore 200 to prevent bolt 70 from being accidentally disassociated or disconnected from balance weight 66 when bolt 70 is unscrewed.

FIG. 5 shows turbine engine section 10 with a portion of the supporting structure indicated generally as 300 having formed therein respective outer and inner access holes 304 and 308 to provide a radially extending pathway indicated generally as 312 for access to balance assembly 58. As shown in FIG. 5, a tool indicated generally as 316 is provided with an elongated shaft 320 that is inserted into pathway 312. Attached at the distal end of shaft 320 is a bolt driver section 324 that is configured or shaped for insertion into the inner driven section 328 of bolt head 176. Typically, bolt drive section 324 and driven section 328 have complementary hexagonal, square or other shaped cross-sections. By rotating or turning shaft 320 in the desired direction, bolt 70 can be screwed or unscrewed in a direction that will cause balance weight 66 to be either moved away from bottom surface 94 of slot 90 such that balance weight 66 is in a secured position, or towards bottom surface 94 such that balance weight 66 is in unsecured position. When balance weight 66 is in an unsecured position, it can then be moved anywhere along the circumferential length of slot 90 (e.g., within lower section 110) to any desired balancing position by simply rotating rotor 14 while tool 316 is in use. When balance weight 66 has reached the desired position, it can then secured within slot 90 as previously described.

While FIGs. 1-5 show only one balance weight 66, it should be understood that typically more than one balance weight 66 is inserted, positioned or present within slot 90. Indeed, typically a pair of balance weights 66 are inserted, positioned or present within slot 90. During initially balancing of rotor 14, the pair of balance weights 66 are typically moved within slot 90 such that they are approximately 180° opposite each other. As balance assembly 58 requires adjustment to trim balance or rebalance rotor 14, the balance weights 66 can be moved to different positions within slot 90 to achieve the desired degree of balancing. If three balance weights 66 are inserted within slot 90, they are typically moved initially within slot 90 to provide approximately 120° spacing (i.e., approximately equal spacing) from each other, and so on in like fashion or manner where more than three balance weights are inserted.

After the balance weight(s) 66 are inserted and initially positioned within slot 90, the positioning of balance weight(s) 66 within slot 90 can be adjusted as needed or desired to balance rotor 14. For example, the positioning of balance weight(s) 66 can be adjusted after the initial operation of rotor 14 to provide subsequent or further balancing thereof, e.g., trim balancing. Access to balance weight(s) 66 to carrying out such subsequent or further balancing of rotor 14 is typically achieved by rotating or turning rotor 14 so that each respective balance weight 66 whose position needs to be adjusted is accessible by tool 316 via pathway 312. The position of the accessed balance weight 66 can then be adjusted with slot 90 as needed.

For completeness, various aspects of the invention are set out in the following numbered clauses:
1. A balance assembly (58) for a rotary turbine component (14), which comprises:

a generally annular balance weight retention member (62) having a circumferential periphery (92) and a slot (90) formed therein along at least a portion thereof, the slot (90) having:
   a bottom surface (94);
   an opening (98) spaced from the bottom surface (94); and
   a pair of spaced apart and opposed side walls (102, 106) connecting the bottom surface (94) and the opening (98), the side walls (102, 106) sloping inwardly between the bottom surface (94) and the opening (98) to define a balance weight engaging section (114);
   at least one balance weight (66) being configured and sized to be insertable through the opening (98) of the slot (90) and to be positionable for movement within the slot (90) and having a pair of spaced apart generally inwardly sloping shoulder surfaces (152, 156) capable of engaging the side walls (102, 106) of the slot (90) at the balance weight engaging section (114); and
   a balance weight securing member (70) associated with the at least one balance weight (66) that can be actuated to:
      move the at least one balance weight (66) away from the bottom surface (94) so that the shoulder surfaces (152, 156) engage the side walls (102, 106) at the balance weight engaging section (114) such that the at least one balance weight (66) is in a secured position within the slot (90); or
      move the at least one balance weight (66) towards the bottom surface (94) so that the shoulder surfaces (152, 156) do not engage the side walls (102, 106) at the balance weight engaging section (114) such that the at least one balance weight (66) is in a unsecured and movable position within the slot (90).
2. The assembly (58) of clause 1 wherein the slot (90) has a generally dovetail-shaped cross-section.
3. The assembly (58) of any of clauses 1 to 2 wherein the slot (90) is formed in the balance weight retention member (62) along the entire circumferential periphery (92) thereof.
4. The assembly (58) of any clauses 1 to 3 wherein the opening (98) of the slot (90) has a substantially uniform width along the entire circumferential periphery (92).
5. The assembly (58) of clauses 1 to 4 wherein the balance weight engaging section (114) of the slot (90) has a generally trapezoidal shape.
6. The assembly (58) of clauses 1 to 5 wherein there are at least two balance weights (66).
7. The assembly (58) of clauses 1 to 6 wherein the balance weight securing member comprises a bolt (70) having a threaded shaft (180) and wherein the at least one balance weight (66) has a threaded portion (188) for receiving the threaded shaft (180) that extends from the top (172) to the bottom (130) of the at least one balance weight (66).
8. The assembly (58) of clauses 1 to 7 wherein the threaded shaft (180) has a distal end (184) that projects outwardly away from the bottom (130) of the at least one balance weight (66) when the bolt (70) is turned in the secured position direction and engages the bottom surface (94) of the slot (90) so that the at least one balance weight (66) is forced away from the bottom surface (94) of the slot (90) and towards the side walls (102, 106) of the slot (90) at the balance weight engaging section (114) thereof.
9. The assembly of clauses 1 to 8 which further comprises a locking member (196, 200) for preventing the bolt (70) from being disconnected from the at least one balance weight (66).
10. A method for installing at least one balance weight (66) in the balance assembly (58) of any of clauses 1 to 9, the method comprising the steps of:
   inserting the at least one balance weight (66) through the opening (98) of the slot (90) of the of the balance weight retention member (62) so that the at least one balance weight (66) is in an inserted position (212) within the slot (90);
   adjusting the at least one balance weight (66) from the inserted position (212) to a balance weight securing member associating position (216) within the slot (90) so that the at least one balance weight (66) is capable of being associated with the balance weight securing member (70); and
   associating a balance weight securing member (70) with the at least one balance weight (66) while in the balance weight securing member associating position (216), the balance weight securing member (70) being capable of being actuated to,
   move the at least one balance weight (66) away from the bottom surface (94) so that the shoulder surfaces (152, 156) engage the side walls (102, 106) at the balance weight engaging section (114) such that the at least one balance weight (66) is in a secured position within the slot (90); or
   move the at least one balance weight (66) towards the bottom surface (94) so that the shoulder surfaces (152, 156) do not engage the side walls (102, 106) at the balance weight engaging section (114) such that the at least one balance weight (66) is in a unsecured position within the slot (90).
11. The method of clause 10 which comprises the further step of associating with the balance weight securing member (70) a locking member (196, 200) that prevents the balance weight securing member (70) from being disassociated from the at least one balance weight (66).
12. The method of any of clauses 10 to 11 which comprises the further step of moving the inserted balance weights (66) in the slot (90) until positioned approximately equally spaced from each other.
13. The method of any of clauses 10 to 12 wherein the rotary turbine component is a rotor (14) positioned within a turbine engine section (10) having a radially extending access pathway (300, 304, 308, 312) for accessing the balance assembly (58).
14. The method of any of clauses 10 to 13 for subsequent balancing of the rotor (14) after insertion of the at least one balance weight (66) and positioning thereof at a first position within the slot (90), and after the rotor (14) is operated such that balancing thereof is needed, the method comprising the further steps of: (4) rotating the rotor (14) such that the at least one balance weight (66) is accessible through the access pathway (312); and (5) moving the at least one balance weight (66) to a second position within the slot (90) to achieve subsequent balancing of the rotor (14).
15. The method of any of clauses 10 to 14 wherein the at least one balance weight (66) is inserted within the slot (90) before the balance weight retention member (62) is secured to the rotor (14).
16. A turbine engine section (10) having: (a) a balance assembly (58) for a rotary turbine component (14) positioned in the turbine section (10); and (b) a radially extending access pathway (300, 304, 308, 312) for accessing the balance assembly (58) for adjusting the position of at least one balance weight (66) within the slot (90) of the balance weight retention member (62) of the balance assembly (58) of any of clauses 1 to 9.

## Claims

1. A balance assembly (58) for a rotary turbine component (14), which comprises:
a generally annular balance weight retention member (62) having a circumferential periphery (92) and a slot (90) formed therein along at least a portion thereof, the slot (90) having:
a bottom surface (94);
an opening (98) spaced from the bottom surface (94); and
a pair of spaced apart and opposed side walls (102, 106) connecting the bottom surface (94) and the opening (98), the side walls (102, 106) sloping inwardly between the bottom surface (94) and the opening (98) to define a balance weight engaging section (114);
at least one balance weight (66) being configured and sized to be insertable through the opening (98) of the slot (90) and to be positionable for movement within the slot (90) and having a pair of spaced apart generally inwardly sloping shoulder surfaces (152, 156) capable of engaging the side walls (102, 106) of the slot (90) at the balance weight engaging section (114); and
a balance weight securing member (70) associated with the at least one balance weight (66) that can be actuated to:
move the at least one balance weight (66) away from the bottom surface (94) so that the shoulder surfaces (152, 156) engage the side walls (102, 106) at the balance weight engaging section (114) such that the at least one balance weight (66) is in a secured position within the slot (90); or
move the at least one balance weight (66) towards the bottom surface (94) so that the shoulder surfaces (152, 156) do not engage the side walls (102, 106) at the balance weight engaging section (114) such that the at least one balance weight (66) is in a unsecured and movable position within the slot (90).

2. The assembly (58) of claim 1 wherein the slot (90) has a generally dovetail-shaped cross-section.

3. The assembly (58) of any of claims 1 to 2 wherein the slot (90) is formed in the balance weight retention member (62) along the entire circumferential periphery (92) thereof.

4. The assembly (58) of any claims 1 to 3 wherein the opening (98) of the slot (90) has a substantially uniform width along the entire circumferential periphery (92).

5. The assembly (58) of claims 1 to 4 wherein the balance weight engaging section (114) of the slot (90) has a generally trapezoidal shape.

6. The assembly (58) of claims 1 to 5 wherein there are at least two balance weights (66).

7. A method for installing at least one balance weight (66) in the balance assembly (58) of any of claims 1 to 9, the method comprising the steps of:
inserting the at least one balance weight (66) through the opening (98) of the slot (90) of the of the balance weight retention member (62) so that the at least one balance weight (66) is in an inserted position (212) within the slot (90);
adjusting the at least one balance weight (66) from the inserted position (212) to a balance weight securing member associating position (216) within the slot (90) so that the at least one balance weight (66) is capable of being associated with the balance weight securing member (70); and
associating a balance weight securing member (70) with the at least one balance weight (66) while in the balance weight securing member associating position (216), the balance weight securing member (70) being capable of being actuated to,
move the at least one balance weight (66) away from the bottom surface (94) so that the shoulder surfaces (152, 156) engage the side walls (102, 106) at the balance weight engaging section (114) such that the at least one balance weight (66) is in a secured position within the slot (90); or
move the at least one balance weight (66) towards the bottom surface (94) so that the shoulder surfaces (152, 156) do not engage the side walls (102, 106) at the balance weight engaging section (114) such that the at least one balance weight (66) is in a unsecured position within the slot (90).

8. The method of claim 7 which comprises the further step of associating with the balance weight securing member (70) a locking member (196, 200) that prevents the balance weight securing member (70) from being disassociated from the at least one balance weight (66).

9. The method of claim 7 or claim 8 which comprises the further step of moving the inserted balance weights (66) in the slot (90) until positioned approximately equally spaced from each other.

10. A turbine engine section (10) having: (a) a balance assembly (58) for a rotary turbine component (14) positioned in the turbine section (10); and (b) a radially extending access pathway (300, 304, 308, 312) for accessing the balance assembly (58) for adjusting the position of at least one balance weight (66) within the slot (90) of the balance weight retention member (62) of the balance assembly (58) of any of claims 1 to 6.
